# EUROPÄISCHE PATENTSCHRIFT

(11) **EP 0 944 329 B1**
(45) Veröffentlichungstag und Bekanntmachung des Hinweises auf die Patenterteilung: **03.03.2004**
(21) Anmeldenummer: 97954402.0
(22) Anmeldetag: 15.12.1997
(51) Int. Cl.: A23B 4/00, A23L 1/317, A23L 3/015, A23B 4/22

(54) **VERFAHREN ZUR HERSTELLUNG STABILER, IN ANWESENHEIT VON MIKROORGANISMEN HERGESTELLTER FLEISCH- UND WURSTWAREN**
METHOD FOR PRODUCING STABLE MEAT PRODUCTS AND SAUSAGES, PRODUCED IN THE PRESENCE OF MICRO-ORGANISMS.
PROCEDE D'OBTENTION DE PRODUITS DE BOUCHERIE ET DE CHARCUTERIE PREPARES EN PRESENCE DE MICRO-ORGANISMES

(30) Priorität: 16.12.1996 DE 19653677
(43) Veröffentlichungstag der Anmeldung: 29.09.1999
(73) Patentinhaber: Kortschack, Fritz, 14089 Berlin (DE)
(72) Erfinder: Kortschack, Fritz, 14089 Berlin (DE)
(74) Vertreter: Kruspig, Volkmar, Dipl.-Ing.
(86) Internationale Anmeldenummer: PCT/EP1997/007033
(87) Internationale Veröffentlichungsnummer: WO 1998/026667

(56) Entgegenhaltungen:
- EP-A- 0 668 026
- DE-C- 19 653 677
- TAKAHASHI T ; HAGA S: "Application of high pressure during the processing of uncooked and fermented hams with pickle curing" ANIMAL SCIENCE AND TECHNOLOGY, Bd. 68, Nr. 4, 1997, Seiten 414-419, XP002061565
- GRIJSPAARDT-VINK C: "Food preservation by hurdle technology" FOOD TECHNOLOGY, Bd. 48, Nr. 12, 1994, Seite 28 XP002061564
- PATENT ABSTRACTS OF JAPAN vol. 017, no. 180 (C-1046), 8.April 1993 & JP 04 335873 A (ATSUSHI SUZUKI;OTHERS: 01), 24.November 1992,
- LEHMANN G: "Hochdruckbehandlung - eine neue Lebensmitteltechnologie" FLEISCHWIRTSCHAFT, Bd. 76, Nr. 10, 1996, Seiten 1004-1005, XP002061566 in der Anmeldung erwähnt
- FARR D: "High pressure technology in the food industry" TRENDS IN FOOD SCIENCE AND TECHNOLOGY, Bd. 1, Juli 1990, Seiten 14-16, XP002061567

## Beschreibung

Die Erfindung betrifft ein Verfahren zur Herstellung stabiler, in Anwesenheit von Mikroorganismen hergestellter Fleisch- und Wurstwaren.

Das Behandlungsgut wird nach dem Erreichen eines vorgegebenen pH-Wertes einer Hochdruckbehandlung in einem speziellen Druckbehälter unterzogen. Dafür sind die Wurst- bzw. Fleischwaren in eine undurchlässige Umverpackung, die sich dem Produkt gut anschmiegt, einzuschließen. Das Behandlungsgut wird dann mehrere Minuten lang einem hohen Druck (ca. 400 bis 600 MPa) ausgesetzt.

Die Art des druckübertragenden Mediums - z. B. Wasser, dem evtl. ein Mittel zum Korrosionsschutz zugesetzt wurde - ist dabei von nachrangiger Bedeutung. Die Hochdruckbehandlung erfolgt bei Raumtemperaturen. Elastische Produkte, wie Wurstund Fleischwaren, finden nach der Druckbehandlung wieder zu ihrer ursprünglichen Form zurück.

Von entscheidender Bedeutung ist die Tatsache, daß sich nach der Hochdruckbehandlung der pH-Wert der so behandelten Roh- und Dauerwaren innerhalb der bisher bekannten Haltbarkeitsfristen nicht mehr ändert.

Der gegenwärtige Stand der Technik die Hochdruckbehandlung von Lebensmitteln betreffend, wird von Prof Dr. G. Lehmann in einem Aufsatz, erschienen in "Fleischwirtschaft" Nr. 10 vom Oktober 1996, Verlagsgruppe Deutscher Fachverlag, Frankfurt am Main, Seite 1004 - 1005, wie nachfolgend zitiert, beschrieben:

Mit der Entwicklung hoher Drucke auf Lebensmittel begann eine neue Technologie zur schonenden Behandlung von Nahrungsmitteln, einerseits um diese zu entkeimen und andererseits um ähnliche Effekte zu erzielen, wie bei der Nahrungszubereitung durch Kochen mit hoher Temperatur.

Dabei kommt es neben der Abtötung von Mikroorganismen zur Denaturierung von Eiweiß, zur Inaktivierung von Enzymen und zur Gelatinierung der Stärke. Durch die Hochdruckbehandlung werden große Moleküle beeinflußt, während kleinere, wie Aminosäuren, Vitamine oder Geschmacksstoffe intakt bleiben.

Als nichtthermischer Prozeß kommt es bei der Hochdruckbehandlung des Fleisches weder zu toxischen Komponenten, noch zu der Ausbildung von off-flavours. Die in flexible Folie verpackte Probe wird unter Druck mehr oder weniger stark verdichtet, gasgefüllte Hohlräume verschwinden, beim Entspannen wird die ursprüngliche Form wieder erhalten. Als Druckträger dient Wasser, für die Behandlung von Fleisch wird ein Druck zwischen 5000 bis 7000 bar angewandt.

Gegenwärtig arbeiten mehrere Forschungsinstitute an der Drucksterilisation.

Als neues Verfahren in der Lebensmitteltechnik sind in den letzten Jahren verschiedene Methoden entwickelt worden mit dem Zweck, die Haltbarkeit der Erzeugnisse durch Abtötung der Verderbnis erzeugenden Mikroorganismen zu verlängern und damit die Frische zu erhalten. Diese neuen Verfahren bedienen sich eines überkritischen Druckes von Kohlendioxid oder eines hohen statischen Druckes.

Im Verlauf der Hochdruckbehandlung von Lebensmitteln kommt es je nach Höhe des Druckes und der Temperatur zu Proteindenaturierung,
Stärkegelatinierung,
Enzymaktivierung und
Abtötung von Mikroorganismen, Insekten und Parasiten.

Durch Hochdruckanwendung wird also die dreidimensionale Struktur der Moleküle beeinflußt. Dabei sind große Moleküle wie Proteine, Enzyme und Polysaccharide deutlich anfälliger, während kleinere Moleküle wie z.B. Aminosäuren, Vitamine und andere niedermolekulare Substanzen intakt bleiben, die für Geschmack, Farbe und Nährwert von Bedeutung sind.

Das Absterben von Mikroorganismen ist neben der Enzymaktivierung sicher einer der wichtigsten Effekte der Hochdruckbehandlung von Lebensmitteln. Diese Sterilisation stellt eine Alternative zu den bekannten Verfahren dar und bietet den großen Vorteil, die Natürlichkeit und ursprüngliche Frische der Produkte zu bewahren. Im Vergleich zu den Erhitzungsprozessen besteht der Vorteil darin, daß sich die Geschmacks-, Strukturund Haltbarkeitseigenschaften von Lebensmittein verbessern lassen, da chemische Reaktionen wie z.B. Maillard-Reaktion, die sich bei der Hitzebehandlung nachteilig auf die Lebensmittelqualität auswirken kann, bei der Hochdruckbehandlung nicht stattfinden. Die Inhaltsstoffe zeigen im Vergleich zu thermisch veränderten Lebensmitteln deutliche Unterschiede. So enthält ein durch Behandlung mit mehreren tausend Atmosphären Druck fest gewordenes Ei im Gegensatz zum gekochten, keine unnatürlichen Aminosäuren. Es besitzt keinen schwefligen Beigeschmack und enthält alle im rohen Ei vorkommenden Vitamine in der ursprünglichen Menge. Es behält auch den Rohgeschmack.

An Backwaren läuft die Retrogradation hochdruckbehandelter Stärke weitaus langsamer ab als nach einer Hitzebehandlung. Durch die damit verbundene Verzögerung des Altbackenwerdens läßt sich die Frische von Backwaren verlängern. Ebenso läßt sich druckbehandelte Stärke mit Amylasen leichter enzymatisch abbauen und damit wird Backwerk besser verträglich. Ergebnisse zeigen, daß bei einer Behandlung von Fleisch durch den hohen Druck die proteolytische Aktivität so gesteuert wird, daß sich die Qualität des Fleisches verbessert.

Die Hochdruckbehandlung stellt also einen nichtthermischen Prozeß dar mit hydrostatischen Drücken von 6000 bis 12000 bar bei Raumtemperatur. Sie hat auf das behandelte Lebensmittel eine ähnliche Auswirkung, wie die thermische Behandlung aber mit den bereits vorstehend aufgeführten Vorteilen. Um einen gleichen Effekt auf die Inhaltsstoffe zu erzielen wie eine Temperaturerhöhung von 10°C, sind 1000 bar erforderlich, wobei aber weder ein Kochgeschmack entsteht, noch Farbkomponenten oder Vitamine in Mitleidenschaft gezogen werden.

Die in flexible Folien verpackten Lebensmittel werden für die Durchführung des Verfahrens in Chargiergestelle oder -körbe eingelegt, die dann in den mit Wasser als Drucküberträger gefüllten Behälter eingeführt werden. Die in der Lebensmittelindustrie eingesetzten thermoplastischen Materialien können auch hier als Verpackungsmaterial verwendet werden. Der Druckbehälter wird nach dem Beladen geschlossen und der Druck aufgebaut, indem ein Kolben in den Druckbehälter eingefahren wird, bis der voreingestellte Druck erreicht ist. Die Druckbehältervolumina liegen zwischen 100 und 12000 Liter. Das Hydraulikaggregat, das den Kolben in Bewegung setzt, arbeitet im Niederdruckbereich, so daß eine hohe Betriebssicherheit gewährleistet ist und und Hochdruckapparaturen als sicher gelten, zumal es sich um hydrostatische Drücke, also ausschließlich um komprimierte Flüssigkeiten handelt und diese sich im Gegensatz zu Gasen bei Entlastung nur sehr wenig ausdehnen. Die Energiemengen, die bei plötzlicher Entlastung frei werden, sind demnach sehr gering.

Die Hochdrucktechnologie für sich alleine ist einfach zu steuern. Der Druck ist der wichtigste Parameter, Zeit und Temperatur spielen eine untergeordnete Rolle, da die Energie über den Druck in das System eingebracht wird. Der Druckaufbau kann in weniger als einer Minute und der Druckabbau in weniger als einer Sekunde vorgenommen werden.

Die bekannten Hochdruckbehandlungsverfahren für Lebensmittel dienen als Ersatz für die bisher üblichen thermischen Sterilisationsmethoden. Sie haben auf die zu behandelnden Lebensmittel eine ähnliche Auswirkung wie die thermische Behandlung, jedoch mit den Vorteilen, daß kleinere Moleküle, wie z.B. Aminosäuren, Vitamine und andere niedermolekulare Substanzen intakt bleiben, die für Geschmack, Farbe und Nährwert von Bedeutung sind.

Das neue Verfahren beschreibt den Einsatz einer Hochdruckbehandlung, um unerwüschte biochemische Prozesse in Minutenfrist sicher zu inaktivieren.

Zum Stand der Technik bezüglich der Hochdruckbehandlung bei der Herstellung von Würsten sei noch auf die EP 0 668 026 A1 verwiesen. Dort wird die Druckbehandlung vor dem eigentlichen Kochen der Würste durchgeführt. Zur Einstellung des pH-Wertes ist dort vorgesehen, beispielsweise eine bestimmte Menge Natriumkarbonat zuzugeben.

In der JP 04 335 873 A erfolgt eine Hochdruckbehandlung von in Folie verpackten Fleischmengen, um den Reifeprozeß zu beschleunigen.

In Food Technology 48; Dezember 1994, Food Preservation by Hurdle Technology, wird der Stand der Technik beim Haltbarmachen von Lebensmitteln dargestellt und auf die Wechselwirkung zwischen Zugabemengen von Salz und Nitrit bezogen auf die bakteriellen Aktivitäten aufmerksam gemacht.

Farr, D.: High pressure technology in the food industry, in: Trends in Food Sience and Technology, Band 1, Juli 1990, Seiten 14 bis 16, geht auf die Behandlung ganz unterschiedlicher Produkte der Lebensmittelindustrie, wie z.B. Milch- und Fleischprodukte ein, wobei aufgezeigt wird, daß die Hochdruckbehandlung zum Reduzieren der mikrobakteriellen Belastung herangezogen werden kann.

Der gegenwärtige Stand der Technik, die Technologie der Rohwurstherstellung betreffend, wird in dem Fachbuch "DIE FABRIKATION FEINER FLEISCH- UND WURSTWAREN" ab Seite 90 beschrieben. Die 20. Auflage des Buches ist 1992 im "Deutscher Fachverlag", Frankfurt am Main, erschienen.

Die Vereinfachung der Rohwurstherstellung hat in den vergangenen zwei Jahrzehnten beträchtliche Fortschritte gemacht. Bei exakter Verarbeitung des Rohmaterials unter Beachtung selbstverständlicher Hygienevorschriften und bei richtiger Handhabung modernen Technologien sind Fehlfabrikate nahezu ausgeschlossen. Allerdings muß der Objektivität wegen auch festgestellt werden, daß es vorkommen kann, daß durch die Vereinfachung eines Produktvorganges neue, bisher nicht gekannte Probleme verschiedener Art entstehen können. Ein typisches Beispiel dafür ist die Rohwurstherstellung unter Verwendung von GdL (Glucono delta Lacton). Dieses Schnellreifemittel hat es ermöglicht, eine Rohwurst innerhalb 48 Stunden verkaufsfertig herzustellen. Es ist jedoch nicht zu übersehen, daß mit GdL hergestellte Rohwurst bei aller Sicherheit und Schnelligkeit nach etwa 2 - 3 Wochen geschmacklich sehr stark abbauen kann. Bisweilen bildet sich ein ranzig-holziger Nebengeschmack, wie überhaupt die Haltbarkeit solcher Ware sehr zu wünschen übrig läßt. Das erklärt sich überwiegend dadurch, daß die Rohwurstproduktion von einem Reifungsprozeß bestimmt wird, der durch Anwendung der Technik allein nicht gesteuert werden kann. Die nur äußerlich beeinflußte Reifung gibt keine Garantie für eine stets einwandfreie Ware.

Um auch den inneren Reifungsablauf sicherzustellen, hat sich die Wissenschaft dieses Problems angenommen. Die Fleischforschung hat festgestellt, daß es sich bei der Rohwurstreifung um einen biologischen Vorgang handelt, der im wesentlichen durch Bakterien gesteuert wird. Ohne Bakterien wird aus Rohwurstmasse niemals Rohwurst. Um diesen Ablauf maßgebend zu unterstützen, sind Starterkulturen entwickelt worden. Das sind Mikroorganismen, die auch bei normaler Naturreifung in der Rohwurst wirksam werden und für die erwünschten Qualitätsmerkmale einer guten Rohwurst sorgen. Im Rohmaterial stellt man sehr häufig einen Mangel an nützlichen Bakterien fest, während die schädlichen Keime überwiegen. Es ist daher sinnvoll, eine genügend große Menge von Reifungsbakterien in Form von Starterkulturen zuzusetzen.

Bestimmte Bakterienarten wurden aus Hunderten von Rohwurstkeimen isoliert. Diese werden großtechnisch gezüchtet und in gefriergetrockneter und gefrorener Form angeboten, was ihre Verwendung bei der Rohwurstherstellung auf einfachste Weise ermöglicht.

Schnelle Umrötung und sichere Farbhaltung wird durch die speziellen Mikrokokken bewirkt, die Salpeter schnell zu Nitrit (Nitratreduktase) und Nitrit zu Stickoxid (Nitritreduktase) abbauen. Über weitere Zwischenstufen entsteht dann die erwünschte stabile Umrrötungsfarbe. Auch bei Verwendung von Nitritpökelsalz wird in kurzer Zeit die Umrötung erreicht, ohne Farbrückschlag und ohne Grautöne in der Anschnittfarbe.

Mit den Starterkulturen wird insgesamt die Produktionssicherheit auf ein Optimum gebracht und ein geschmacklich wie aromatisch einwandfreies Fertigerzeugnis erreicht. Das durch die Mikrokokken gebildete Ferment bewirkt eine längere Haltbarkeit, wodurch die Gefahr der Ranzigkeit weitgehend vermieden wird.

Schnelle Schnittfestigkeit wird durch die Fähigkeit der Laktobakterien erzielt, Zucker in Milchsäure umzuwandeln. Es vollzieht sich eine pH-Wert-Senkung ohne Beeinträchtigung des sich bildenden Aromas und Geschmacks. Unerwünschte Säuren werden nicht gebildet. Es tritt keine Beißigkeit auf. Im Gegenteil, die Wurst wird milder.

Die Verarbeitung von Starterkulturen ist nicht schwieriger als die der GdL-Produkte. Beachtet man die genau gegebenen Arbeitsanweisungen der Hersteller, so ist die Verwendung denkbar einfach und risikolos.

Der Prozeß der Nachreifung im Abhängeraum ist für die Haltbarkeit, als auch für die Stabilisierung der Farbe und des Aromas von ausschlaggebender Bedeutung. Insbesondere Dauerwürste, an die hinsichtlich ihrer Haltbarkeit höhere Anforderungen gestellt werden, müssen eine ausreichende Nachreifung haben.

Dazu ist folgendes zu ergänzen: Bei der Beschreibung von Herstellungsverfahren wird häufig vergessen, daß auch die groben streichfähigen oder feinen streichfähigen Mettwürste Mettenden, [Teewürste] usw. Rohwürste sind. Umrötung, ph-Wert-Senkung, Mikroflora, also viele biochemische Reakionen, laufen ähnlch oder gleich ab wie bei den schnittfesten Rohwürsten. Nur die Haltbarmachung durch Austrocknung fehlt. Eine Austrocknung wird auch meist gar nicht gewünscht, da die Wurst dann ihre Geschmeidigkeit und Streichfähigkeit verliert Eine gewisse Haltbarkeit wird erreicht durch die pH-Wert-Absenkung, entsprechende Salzzugabe und Räucherung der Würste. Um überhaupt verkehrsfähig zu sein, muß die Wurst umgerötet und einer Fermentation unterworfen sein, d h., daß neben der Umrötung der pH-Wert unter 5,5 sein sollte und die Mikroflora überwiegend aus Laktobazillen und Mikrokokkenarten bestehen muß (Rohwurstflora). (zitiert nach W Frey: Die sichere Fleischwarenherstellung, Leitfaden für den Praktiker, Hans Holzmann-Verlag 1992).

Der Produktionsverlauf von Roh- und Dauerwaren ist nicht zu standardisieren: Zum Gelingen der Produkte sind biochemische Vorgänge erforderlich. Dabei ist das Verhalten der mitwirkenden lebenden Mikroorganismen von einer Vielzahl teilweise unbeeinflußbarer Faktoren abhängig.

Aufgabe der Erfindung ist es daher, ein Verfahren anzugeben, nach dem in einfacher und sicherer Weise die Fertigungsschritte der Roh- und Dauerwurstherstellung durchgeführt werden können und mit dem ein qualitativ stabiles Endprodukt entsteht.

Diese Aufgabe wird gemäß Patentanspruch gelöst.

Das erfindungsgemäße Verfahren befähigt den Produzenten, die Aktivitäten der erwünschten und auch der unerwünschten Mikroflora zu einem klar zu definierenden Zeitpunkt mittels der Hochdruckbehandlung zu unterbinden. Dabei ist es gleichgültig, welches der üblichen Reifeverfahren (Klima-, Schnell- oder Naturreifeverfahren) zum Einsatz gelangt.

In jedem Fall bleibt der pH-Wert nach der Hochdruckbehandlung in den Halbfertigprodukten stabil. Es finden keine relevanten biochemischen Prozesse mehr statt.

Zur Herstellung von Roh- und Dauerwaren ist die Mitwirkung von lebenden Organismen unerläßlich. Obwohl die Rohwurstherstellung als sehr robuste Technologie gilt, besteht ständig die Gefahr, daß aufgrund mikrobiologischer Risiken Fehlfabrikate von schlechter Qualität oder mit mangelnder Farb- und Lagerstabilität entstehen. Trotz des Einsatzes von Starterkulturen kommt es immer wieder vor, daß unvorhergesehene Umstände Qualitätsabweichungen zur Folge haben. Zum Beispiel führen eine hohe Ausgangskeimzahl des Rohmaterials, hohe Zuckergaben, mangelhafte Feuchtigkeitsabgabe der Rohprodukte oder eine falsche Temperaturführung während der Reifung in der Regel zu einer zu starken Säuerung. Ähnliche Ursachen sind für die Aktivitäten von Peroxidbildnern verantwortlich, so daß neben einer negativen Geschmacksentwicklung die Produkte sehr schnell zur Ranzidität neigen.

Bei der Verarbeitung von GdL wurde häufig festgestellt, daß nur frisch produzierte Ware verzehrfähig war. Ältere Produkte entwickelten einen unangenehmen, abweichenden Geschmack. Dieser Mangel ist auf die unerwünschte Aktivität von Mikroorganismen in dem Lebensmittel zurückzuführen.

Diese genannten Fehlentwicklungen während der Produktion von Roh- und Dauerwaren können durch die Hochdruckbehandlung der Halbfertigprodukte, sobald der gewünschte pH-Wert erreicht ist, verhindert werden. Nach einer derartigen Behandlung, die das Produkt ansonsten in keiner Weise belastet, verlängert sich die Verkehrsfähigkeit (Farb- und Lagerstabilität) der Produkte um ein Mehrfaches.

Nach einer ordnungsgemäßen Fertigung, Reifung, Hochdruckbehandlung und evtl. weiteren Austrocknung bzw. Angleichung entsprechend DE 44 10 332 Cl können die Roh- und Dauerwaren, die sich durch eine hohe Farb- und Lagerstabilität auszeichnen, vermarktet werden. Das erfindungsgemäße Verfahren stellt sicher, daß nach Abschluß der Fertigung die Roh- und Dauerware aufgrund biochemischer Vorgänge keiner unmittelbaren Veränderung - hinsichtlich ihrer Qualität, Geschmack und Farbe - aufgrund biochemischer Vorgänge mehr unterliegt.

### Ausführungsbeispiel

In einem Versuch wurden mehrere handelsübliche Teewürste einer Charge unmittelbar nach dem Räuchervorgang einer Hochdruckbehandlung unterworfen.

| | |
|---|---|
| Druck | unter 500 Mpa |
| Behandlungsdauer | ca. 10 Minuten |
| Temperatur | 20°C |
| Laktobazillen vor der Behandlung | 3,0 " 10⁸ KBEg⁻¹ |
| Laktobazillen nach der Behandlung | 1,4 " 10⁴ KBEg⁻¹. |

Durch Variation der Druckintensität, der Behandlungsdauer und des Zeitpunktes der Behandlung in Abhängigkeit von Reifegrad der Halbfabrikate lassen sich die erwünschten Keimreduzierungen beliebig einstellen.

## Patentansprüche

1. Verfahren zur Herstellung stabiler, in Anwesenheit von Mikroorganismen hergestellter Fleisch- und Wurstwaren, die einer Reifung und Trocknung unterworfen werden, nämlich von Roh-, Dauer- oder Hartwürsten aus Halbfabrikaten
**dadurch gekennzeichnet,**
**daß** die Halbfabrikate nach Erreichen des gewünschten und zum Halten dieses End-pH-Wertes mehrere Minuten bei Raumtemperatur einer Hochdruckbehandlung unterworfen und dann in üblicher Weise weiter bearbeitet werden, wobei durch die Hochdruckbehandlung die Aktivitäten der Mikroflora gezielt unterbrechbar sind.

## Claims

1. A method of producing stable meat products and sausages which are produced in the presence of micro-organisms and are subjected to maturing and drying, namely uncooked, smoked or dry sausages made from semi-finished products,
**characterised in that** once they reach the desired final pH value, and to maintain this final pH value, the semi-finished products are subjected to a high-pressure treatment at room temperature for a few minutes and are then processed further in conventional manner, it being possible to interrupt the activity of the micro-flora in a controlled manner as a result of the high-pressure treatment.

## Revendications

1. Procédé pour la fabrication de produits de boucherie-charcuterie stables et fabriqués en présence de micro-organismes, qui sont soumis à une maturation et un séchage, c'est-à-dire de saucisses à tartiner, de saucissons crus ou de saucissons secs à base de demi-produits,
**caractérisé en ce que**
les demi-produits sont soumis à un traitement à haute pression pendant plusieurs minutes à la température ambiante, après avoir atteint le pH final souhaité et pour le conserver, et sont traités ensuite de façon classique, les activités de la microflore pouvant être interrompues de façon appropriée par le traitement à haute pression.
